# FASCICULE DE BREVET EUROPEEN

(11) **EP 2 377 235 B1**
(45) Date de publication et mention de la délivrance du brevet: **02.09.2015**
(21) Numéro de dépôt: 10706013.9
(22) Date de dépôt: 08.01.2010
(51) Int. Cl.: H02M 7/493, H02H 7/122, H02P 1/00, B64D 31/02

(54) **SYSTEME ELECTRIQUE DE DEMARRAGE DES MOTEURS D'UN AERONEF.**
ELEKTRISCHES SYSTEM ZUM HOCHFAHREN VON FLUGZEUGMOTOREN
ELECTRICAL SYSTEM FOR STARTING UP AIRCRAFT ENGINES

(30) Priorité: 09.01.2009 FR 0950102
(43) Date de publication de la demande: 19.10.2011
(73) Titulaire: HISPANO SUIZA, 92700 Colombes (FR)
(72) Inventeur: DE WERGIFOSSE, Eric, F-77515 Saint Augustin (FR)
(74) Mandataire: David, Alain
(86) Numéro de dépôt international: PCT/FR2010/050026
(87) Numéro de publication internationale: WO 2010/079308

(56) Documents cités:
- DE-A1- 10 018 668
- JP-A- 5 103 418
- JP-A- 2003 209 973
- US-A1- 2004 141 347

## Description

### Domaine de l'invention

La présente invention se rapporte au domaine des convertisseurs de puissance et elle concerne plus particulièrement les systèmes de démarrage des moteurs aéronautiques.

### Art antérieur

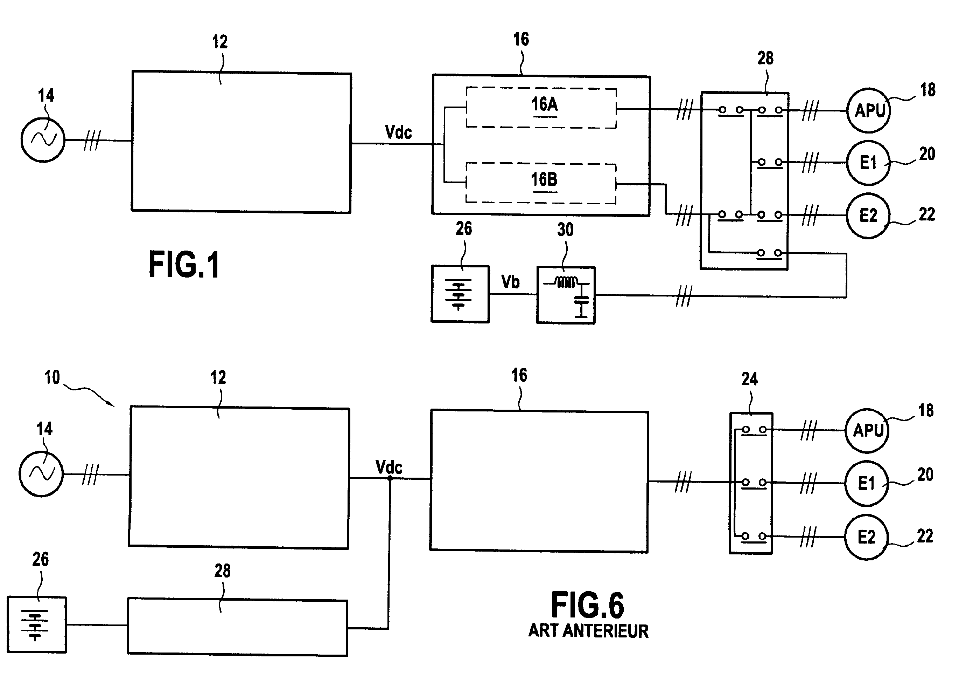

Dans le domaine aéronautique, il est connu de démarrer les moteurs de propulsion et le groupe auxiliaire (dit aussi APU pour auxiliary power unit) d'un aéronef à partir d'un système électrique de démarrage du type de celui illustré à la figure 6. Un tel système 10 comporte classiquement un redresseur AC/DC 12 pour obtenir une tension :continue Vdc à partir du réseau d'alimentation de bord de l'aéronef 14 ou du groupe sol, suivi d'un convertisseur DC/AC 16 pour alimenter les démarreurs-générateurs 18, 20, 22 des moteurs associés (via une matrice de connexion 24) pendant la phase de démarrage de ces moteurs. Le convertisseur DC/AC 16, comporte en général un onduleur du niveau de puissance 'Pn' requis pour démarrer un moteur de propulsion au sol. Pour améliorer la fiabilité relative à la capacité de redémarrage en vol et le taux de disponibilité (dispatch) pour un démarrage au sol, un deuxième onduleur de même puissance 'Pn' peut être rajouté. Toutefois, une telle adjonction est consommatrice de poids et de volume et donc de coûts supplémentaires. DE 10018668 montre un moteur entraîné par deux convertisseurs parallèles.

Le réseau d'alimentation est classiquement le réseau de puissance 115Vac ou tout autre réseau comme le 230Vac. La tension continue obtenue en sortie du redresseur est par exemple du 270Vdc ou du 540Vdc, ou autre.

Lorsqu'aucun des réseaux électriques de puissance n'est disponible, le démarrage des moteurs de propulsion peut être réalisé à partir de l'APU, qui lui-même est démarré à partir d'une batterie. Il est donc nécessaire de rajouter un convertisseur DC/DC 28 délivrant une tension compatible avec la tension en entrée de l'onduleur à laquelle il est relié. Les tensions de batterie conventionnelles étant classiquement comprises entre 24Vdc et 48Vdc, ce convertisseur DC/DC survolteur (ou Boost) multi-étages ou multicellulaire, éventuellement à isolation galvanique, comprend nécessairement un rapport d'élévation élevé, typiquement supérieur à 10, et c'est donc un équipement complexe et difficile à réguler, lourd, volumineux et donc en définitive particulièrement coûteux.

### Objet et définition de l'invention

La présente invention propose donc de pallier les inconvénients précités et plus particulièrement de minimiser la masse du matériel nécessaire pour assurer le démarrage des moteurs de propulsion et de l'APU d'un aéronef à partir du réseau de puissance ou d'une batterie, avec un taux de fiabilité élevé pour un re-démarrage en vol et si nécessaire également avec un taux de « dispatch » suffisant élevé pour les démarrages au sol.

Ces buts sont atteints par un système électrique de démarrage d'au moins un moteur selon la revendication 1.

Selon la configuration envisagée, ledit module de conversion DC/AC comporte au moins deux onduleurs et chacun desdits k onduleurs délivrent une puissance Pmax/k ou au moins trois onduleurs et chacun desdits k onduleurs délivrent une puissance Pmax/(k-1).

Ainsi, avec l'une ou l'autre de ces configurations dans lesquelles la conversion DC/AC est découpée en tranches d'onduleurs parallèles de puissance au plus égale à P/2, la taille en masse et volume du système électrique de démarrage est notablement réduite ainsi que son coût global. Pour qu'il y ait un intérêt à cette configuration, il est indispensable qu'au moins un des moteurs requière une puissance au moins (k-1) fois inférieure à ladite puissance maximale, et/ou doit être capable de démarrer, dans des conditions critiques de sécurité, avec une puissance au moins (k-1) fois inférieure à ladite puissance maximale.

De façon avantageuse, ledit module de conversion DC/AC peut comporter deux ou trois onduleurs triphasés disposés en parallèle. Mais, bien entendu une configuration avec plus de trois onduleurs est possible selon la puissance maximale mise en oeuvre.

Lorsque ledit au moins un moteur du système électrique de démarrage est capable de démarrer dans des conditions critiques de sécurité avec ladite puissance au moins deux fois inférieure à la puissance maximale, ledit au moins un moteur est alimenté par l'un seulement desdits deux onduleurs triphasés de façon à augmenter le taux de fiabilité du système dans lesdites conditions critiques de sécurité par une redondance du type 1 sur 2.

Avantageusement, ledit au moins un moteur est alimenté par deux desdits trois onduleurs triphasés de façon à augmenter le taux de fiabilité du système par une redondance du type 2 sur 3.

Lorsque le système électrique de démarrage est appliqué au démarrage à partir d'une batterie et ledit au moins un moteur du système électrique de démarrage est capable de démarrer avec ladite puissance au moins deux fois inférieure à la puissance maximale, ladite batterie est reliée à un desdits onduleurs à n phases au travers desdites n inductances en série pour, en formant un convertisseur survolteur DC/DC, délivrer ladite tension continue Vdc, laquelle tension continue Vdc appliquée à un autre desdits onduleurs à n phases au travers dudit dispositif de protection électronique délivre au travers desdites n inductances en série ladite tension alternative permettant le démarrage dudit au moins un moteur à partir de ladite batterie lorsque le réseau de puissance alternatif est indisponible.

De préférence, pour obtenir la tension continue Vdc à partir de la batterie, la commande du convertisseur survolteur DC/DC est effectuée par un circuit de commande avec un rapport cyclique de commutation fixe.

Avantageusement, ledit dispositif de protection électronique comporte un interrupteur commandé en série sur une des deux lignes d'alimentation et un condensateur en parallèle sur ces deux lignes d'alimentation du coté dudit onduleur.

De préférence, le système électrique de démarrage selon l'invention comporte en outre un filtre disposé en sortie de ladite batterie.

### Brève description des dessins

Les caractéristiques et avantages de la présente invention ressortiront mieux de la description suivante, faite à titre indicatif et non limitatif, en regard des dessins annexés sur lesquels :
- la figure 1 est un schéma de principe illustrant un système électrique de démarrage de moteurs conforme à la présente invention,
- les figures 1A et 1B montrent le détail d'un module de conversion DC/AC du système de la figure 1,
- les figures 2A à 2D illustrent différentes configurations de fonctionnement du système de la figure 1,
- la figure 3 illustre en détail la configuration de la figure 2D,
- la figure 4 montre des diagrammes des temps à certains points caractéristiques de la configuration de la figure 3,
- les figures 5A à 5D illustrent différentes autres configurations de fonctionnement du système de la figure 1, et
- la figure 6 est un schéma de principe d'un système électrique de démarrage de moteurs de l'art antérieur.

### Description détaillée d'un mode de réalisation préférentiel

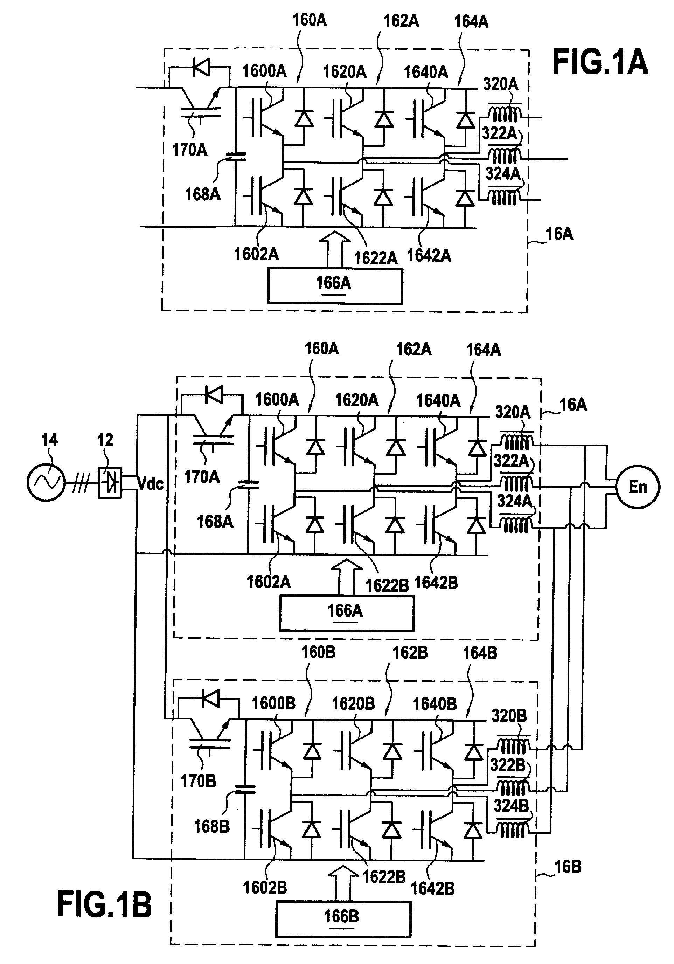

La figure 1 illustre de façon schématique le système électrique de démarrage de moteurs selon l'invention.

On retrouve, comme dans les systèmes de l'art antérieur, le redresseur AC/DC 12 servant à redresser la tension alternative fournie par le réseau d'alimentation 14, avantageusement triphasé et qui est suivi pareillement par le convertisseur DC/AC 16 alimentant les différents générateurs de démarrage 18, 20, 22 au travers de la matrice de connexion dont la position des différents contacteurs donnée à titre d'exemple permet des modes fonctionnement différents. Cette matrice 28 est toutefois sensiblement différente pour intégrer une voie supplémentaire en provenance de la batterie 26 qui, contrairement aux systèmes de l'art antérieur, n'est pas suivie d'un convertisseur DC/DC mais simplement par un filtre classique 30 dont la sortie alimente directement et par sa sortie, via cette matrice de connexion 28, le convertisseur DC/AC. On notera que la réduction du nombre de dispositifs à semiconducteur qu'entraine la suppression de ce convertisseur DC/DC a pour conséquence d'améliorer le facteur de fiabilité (MTBF) global du système.

Selon l'invention, ce convertisseur est constitué de plusieurs tranches parallèles de convertisseur DC/AC dont la structure bidirectionnelle identique va maintenant être décrite au regard de la figure 1A.

Chaque tranche de convertisseur DC/AC (par exemple la première tranche 16A) comporte en effet au moins un dispositif électronique de protection (idéalement un interrupteur électronique commandé 170A, par exemple un transistor IGBT muni de sa diode antiparallèle, associé à un condensateur 168A), un onduleur conventionnel à n phases (classiquement à trois phases comme illustré) et un jeu de n inductances 320A, 322A, 324A en série avec les n sorties de l'onduleur.

Plus précisément, l'onduleur triphasé représenté comporte deux lignes d'alimentation, dont l'une formant ligne de masse, entre lesquelles sont montés trois bras comportant chacun deux commutateurs en série. Le point de liaison entre les deux commutateurs 1600A, 1602A formant le premier bras 160A est relié à une extrémité de la première inductance 324A disposée en sortie de l'onduleur, son autre extrémité étant connectée à une ligne d'alimentation d'un démarreur-générateur 18, 20, 22 via la matrice de connexion 28. De même, le point de liaison entre les deux commutateurs 1620A, 1622A du deuxième bras 162A de cet onduleur est relié à l'extrémité de la deuxième inductance 322A. Enfin, le point de liaison entre les deux commutateurs 1640A, 1642A du troisième bras 164A est relié à l'extrémité de la troisième inductance 320A. Ces commutateurs sont classiquement des transistors IGBT aux bornes desquels sont montées des diodes antiparallèles et dont la commutation est assurée par un circuit de commande 166A qui assure aussi la commande du commutateur 170A.

Plus généralement, le convertisseur DC/AC 16 pourra comporter k onduleurs à n phases disposés en parallèle (avec k>1) de façon à pouvoir délivrer une puissance Pmax/k ou Pmax/(k-1), Pmax étant la puissance requise pour le démarrage des moteurs dans les conditions exigeant le niveau de puissance maximal. Ce principe de découpe en k tranches d'onduleur de puissance au moins deux fois inférieure à la puissance maximale Pmax peut être généralisé. Ainsi, en fonction de l'application et du niveau de puissance, le paramètre 'k' devient une variable d'optimisation de la masse et/ou du coût.

La figure 1B illustre un mode fonctionnement particulier du système électrique de démarrage des moteurs de la figure 1 dans lequel l'un des moteurs de puissance maximale est démarré depuis le réseau de puissance 14 via le redresseur AC/DC 12 et alimenté à partir des deux tranches de convertisseur DC/AC 16A et 16B (les contacteurs concernés de la matrice de connexion 28 sont supposés fermés et donc non représentés). Chaque tranche est dimensionnée pour délivrer une puissance Pmax/2.

On retrouve bien entendu la structure décrite en regard de la figure 1A qui se retrouve dupliquée dans cette configuration particulière de fonctionnement, chaque tranche comportant son propre circuit de commande 166A, 166B assurant classiquement, chacun par sa propre boucle de contrôle en courant associée aux trois inductances de sortie de l'onduleur triphasé, une répartition équilibrée de la puissance maximale délivrée au démarreur-générateur du moteur considéré. Dans cette configuration, les commutateurs 170A, 170B évitent la propagation d'un défaut de type court-circuit entre les lignes d'alimentation délivrant la tension continue Vdc entre les tranches de l'onduleur.

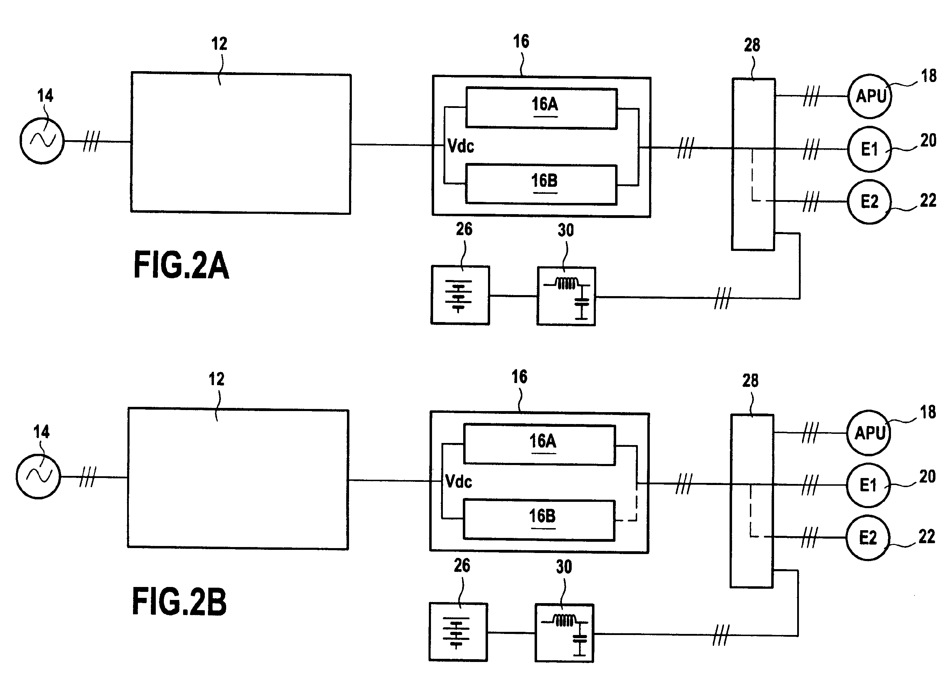

Les figures 2A à 2D illustrent de façon schématique différents modes de fonctionnements possibles avec le système électrique de démarrage de moteurs de l'invention.

La figure 2A schématise la structure décrite précédemment en regard de la figure 1B et correspond par exemple, dans le cas du démarrage des moteurs d'un aéronef, au cas où seul un taux de fiabilité de re-démarrage en vol est recherché. Dans cette configuration, le système comprend alors deux tranches de convertisseurs DC/AC 16A, 16B dont les deux onduleurs de puissance Pn/2 sont couplés et synchronisés de façon à fournir la puissance Pn requise pour un démarrage au sol.

Pour un redémarrage en vol, la puissance requise étant généralement inférieur à Pn/2, une seule tranche de convertisseurs DC/AC suffit, et comme l'illustre la figure 2B, l'un ou l'autre des moteurs de propulsion 20, 22 peut être redémarré depuis le réseau de puissance 14, permettant ainsi une redondance 1 sur 2 pour assurer un taux élevé de fiabilité.

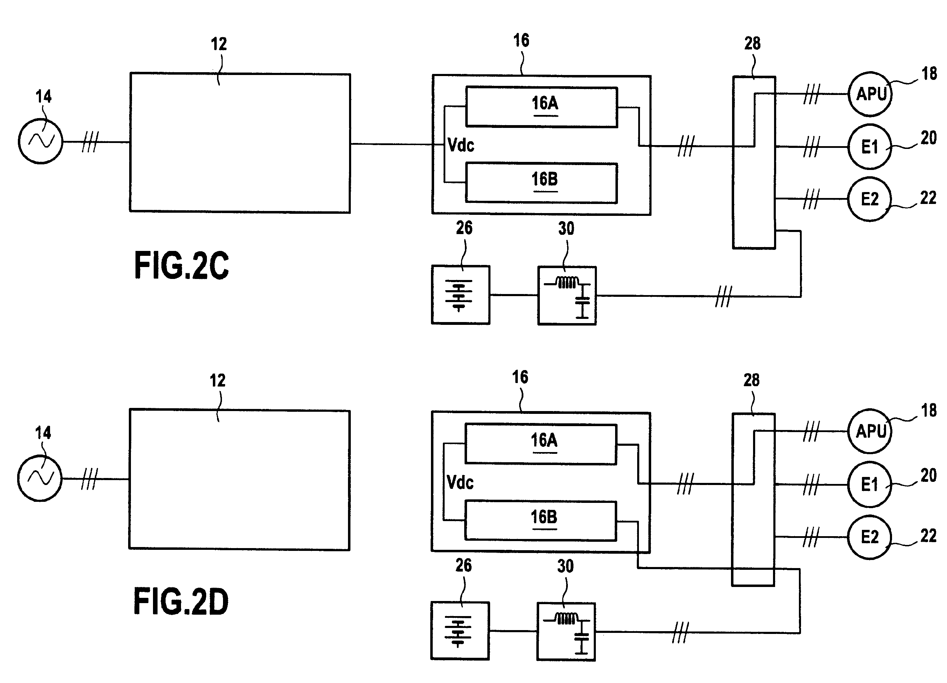

On retrouve une configuration identique illustrée à la figure 2C pour le démarrage de l'APU car celui-ci présente en général une puissance moindre et notamment bien inférieur à Pn/2.

Par contre, pour le démarrage de l'APU à partir de la batterie, comme l'illustre la figure 2D, les deux tranches du convertisseur DC/AC sont utilisées mais l'une est alors dédiée à la conversion DC/DC pour l'élévation de la tension de batterie, tandis que l'autre fonctionne classiquement en conversion DC/AC.

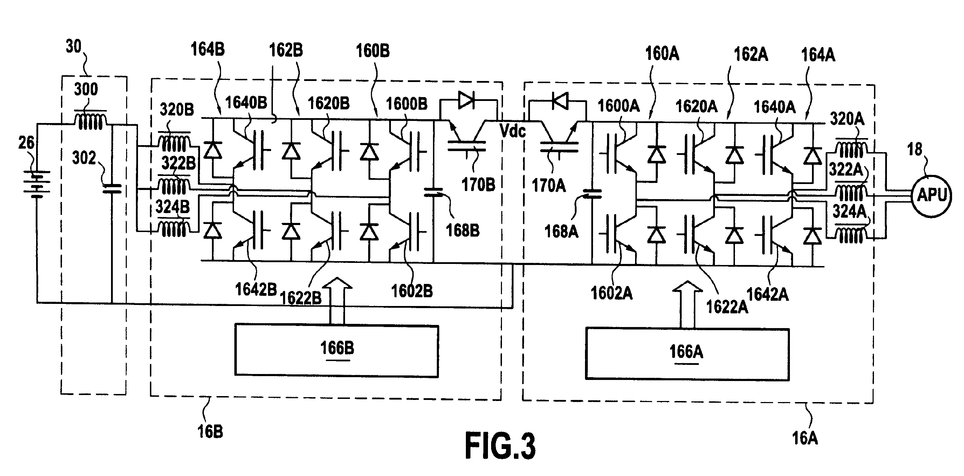

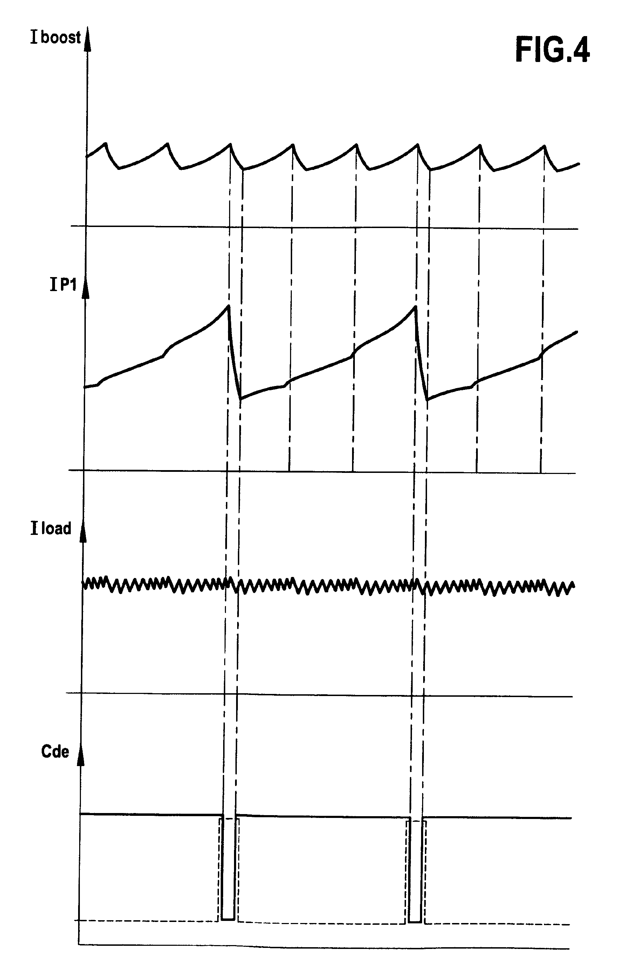

Les figures 3 et 4 illustrent plus précisément cette configuration.

La figure 3 montre en détail les différents circuits permettant, par exemple, le démarrage de l'APU 18 à partir de la batterie 26.

Aux deux bornes de la batterie 26 (borne de tension et borne de masse) est relié un filtre 30 qui dans l'exemple illustré est un filtre classique de type LC avec une inductance en série 300 et un condensateur en parallèle 302. A l'une des bornes de sortie de ce filtre, au point de jonction de l'inductance 300 et du condensateur 302 sont reliées les premières extrémités de trois inductances 320B, 322B, 324B dont les secondes extrémités sont reliées chacune au point de liaison entre les deux commutateurs de l'un des bras d'une tranche 16B du convertisseur DC/AC dont l'une des lignes d'alimentation, formant ligne de masse, est reliée à l'autre des bornes de sortie du filtre elle-même reliée à la borne de masse de la batterie.

Ainsi, l'extrémité de la première inductance 324B est reliée au point de liaison (ou point milieu) entre les deux commutateurs 1600B, 1602B du premier bras 160B de la tranche 16B du convertisseur DC/AC. De même, l'extrémité de la deuxième inductance 322B est reliée au point de liaison entre les deux commutateurs 1620B, 1622B du deuxième bras 162B. Enfin, l'extrémité de la troisième inductance 320B est reliée au point de liaison entre les deux commutateurs 1640B, 1642B du troisième bras 164B. Ces commutateurs sont classiquement des transistors IGBT aux bornes desquels sont montées des diodes antiparallèles et dont la commutation est assurée par un circuit de commande 166B. Un condensateur en parallèle 168B relie les deux lignes d'alimentation de la tranche 16B du convertisseur DC/AC et un commutateur 170B en série sur une des lignes d'alimentation délivre sur cette ligne d'alimentation la tension continue Vdc de cette tranche 16B. Comme les commutateurs précédents, le commutateur 170B, par exemple un transistor IGBT muni de sa diode antiparallèle, est commandé à partir du circuit de commande 166B.

En sortie du commutateur 170B, la ligne d'alimentation DC de la tranche 16B du convertisseur DC/AC est reliée directement à la ligne d'alimentation DC de l'autre tranche 16A du convertisseur DC/AC (en effet, le réseau d'alimentation étant absent, le redresseur ne délivre aucune tension et les lignes d'alimentation des deux tranches du convertisseur DC/AC se retrouve donc en liaison directe) qui est en série avec un autre commutateur 170A, par exemple un transistor IGBT muni de sa diode antiparallèle dont la commutation est assurée par un circuit de commande 166A et en sortie duquel est monté en parallèle un condensateur 168A qui délivre la tension d'entrée pour cette tranche 16A du convertisseur DC/AC. L'autre ligne d'alimentation de cette tranche 16A, formant ligne de masse, est reliée à la ligne de masse de la tranche 16B.

La tranche 16A du convertisseur DC/AC présente une structure semblable à celle de la tranche 16B avec le point de liaison entre les deux commutateurs 1600A, 1602A du premier bras 160A de cette tranche 16A relié cette fois à une l'extrémité d'une première inductance 324A de sortie de l'onduleur. L'autre extrémité étant connectée à une ligne du démarreur-générateur de l'APU. De même, le point de liaison entre les deux commutateurs 1620A, 1622A du deuxième bras 162A est relié à l'extrémité d'une deuxième inductance 322A. Enfin, le point de liaison entre les deux commutateurs 1640A, 1642A du troisième bras 164A est relié à l'extrémité d'une troisième inductance 320A. Comme pour la tranche précédente, ces commutateurs sont classiquement des transistors IGBT aux bornes desquels sont montées des diodes antiparallèles et dont la commutation est assurée par un circuit de commande 166A.

Le fonctionnement du système électrique de démarrage dans cette configuration est maintenant décrit en regard des diagrammes des temps simplifiés de la figure 4 dans lesquels le signal IBoost est le courant d'alimentation en sortie du filtre 30, le signal Ipl est le courant traversant l'une quelconque des inductances 320B, 322B, 324B, le signal Iload est le courant sur la ligne d'alimentation en sortie de la tranche 16B du convertisseur DC/AC et les deux signaux Cde complémentaires sont les deux signaux de commande appliqués au niveau des commutateurs pairs et respectivement impairs de la tranche 16B.

Tout d'abord, il conviendra de noter que les différents connecteurs nécessaires à la liaison des différents circuits entre eux ont été volontairement omis pour ne pas surcharger les dessins. Mais, bien entendu, l'homme du métier sera de lui-même les replacer pour permettre l'activation des seuls circuits concernés lors de la séquence de démarrage à partir de la batterie. Dans cette configuration de démarrage à partir de la batterie 26, le courant délivré par celle-ci est préalablement filtré par le filtre 30 qui en réduit ainsi le niveau d'ondulation de courant. La forme du courant avant filtrage est donnée par le diagramme IBoost qui montre un courant présentant une ondulation à une fréquence élevée correspondant au triple de la fréquence de commutation des commutateurs. La tension de la batterie appliquée aux bornes des trois inductances 320B, 322B, 324B reliées aux points de liaison des commutateurs de la tranche 16B du convertisseur DC/AC est utilisée pour former un convertisseur DC/DC survolteur (de type boost bidirectionnel entrelacé) permettant d'élever la tension de la batterie (en pratique 24Vdc) à celle désirée pour la tension d'entrée de l'autre tranche du convertisseur DC/AC (à savoir par exemple 270Vdc) dont le fonctionnement pour assurer la commande du démarreur-générateur de l'APU, sous l'action du circuit de commande 166A, est par contre conventionnel. Le niveau désiré de la tension de sortie de la tranche 16B dépendant, comme il est connu, du rapport cyclique de commutation qui peut être choisi, avantageusement, fixe pour éviter les problèmes de stabilité de la boucle d'asservissement de tension, connu pour être difficile à ce haut rapport d'élévation de tension, comme illustré par la forme des signaux Cde. La forme du courant Ip1 traversant ces inductances montre que sa fréquence d'ondulation est égale à la fréquence de la modulation de largeur d'impulsion des IGBT, que son amplitude moyenne est trois fois plus faible que celui Iboost et que son taux d'ondulation est trois fois plus important que celui de Iboost. L'entrelaçage permet donc de diviser par n (n = nombre de phase =3 dans l'exemple illustré) le taux d'ondulation de courant à traiter par le filtre 30. Le filtre 30, donné ici à titre d'exemple, est du type LC à 1 cellule mais plusieurs autres types de filtre pourraient être également utilisés. Le rapport de transformation étant élevé, la capacité 168B est chargée par des pics de courant importants de très courte durée. Un autre effet bénéfique de l'entrelaçage est la réduction de l'amplitude de ces pics de courant par le facteur n (n = 3 ici) et l'augmentation de la fréquence correspondante dans un rapport n, permettant de réduire la contrainte sur la capacité 168B et d'améliorer l'effet du filtrage. La forme de courant Iload montre le courant délivré à l'autre tranche du convertisseur DC/AC qui ne présente plus alors qu'une très faible ondulation.

De façon avantageuse, les commutateurs 1640B, 1620B, et 1600B peuvent être également activés (en inverse par rapport au commutateur se trouvant en série), de façon à obtenir un convertisseur bidirectionnel. Ce principe de fonctionnement permet de fonctionner en mode continu quelque soit la puissance fournie. Avec un rapport cyclique fixe, la tension de sortie est alors peu affectée par le niveau de charge.

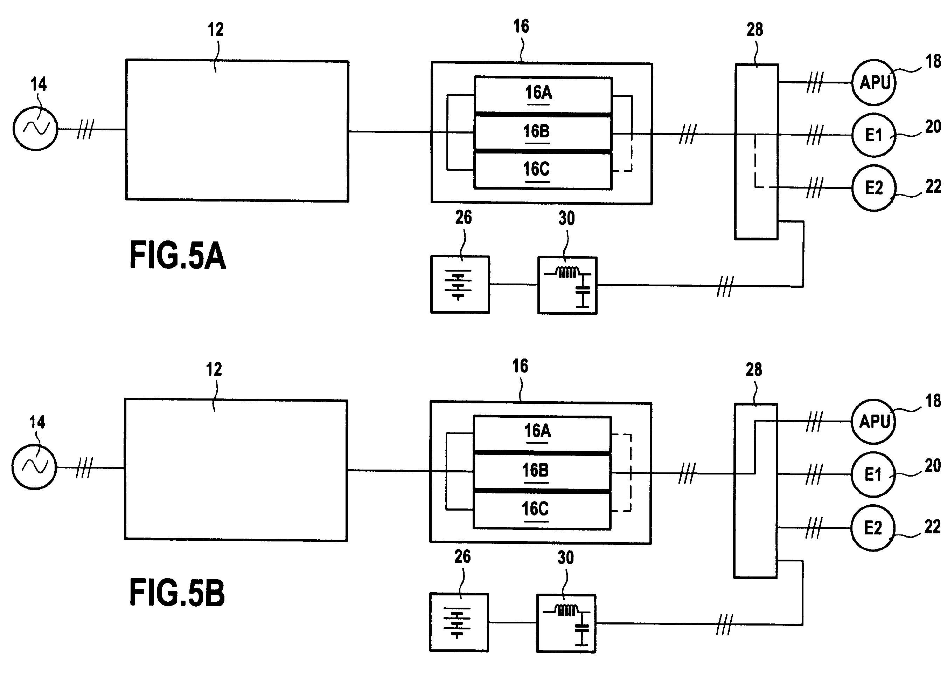

D'autres modes de fonctionnements possibles avec le système électrique de démarrage de moteurs de l'invention sont illustrés de façon schématique aux figures 5A à 5D.

Ainsi, la figure 5A montre un système comportant 3 onduleurs de puissance Pmax/2 particulièrement adapté à un fonctionnement dans le cas où le taux de « dispatch » pour un démarrage au sol est déterminant. En effet, pour un tel démarrage au sol, la redondance de type 2 sur 3 assure un taux de « dispatch » élevé.

La figure 5B illustre le cas d'un re-démarrage en vol où, avec ce système à 3 onduleurs, le taux de fiabilité s'accroît encore avec une redondance de type 1 sur 3.

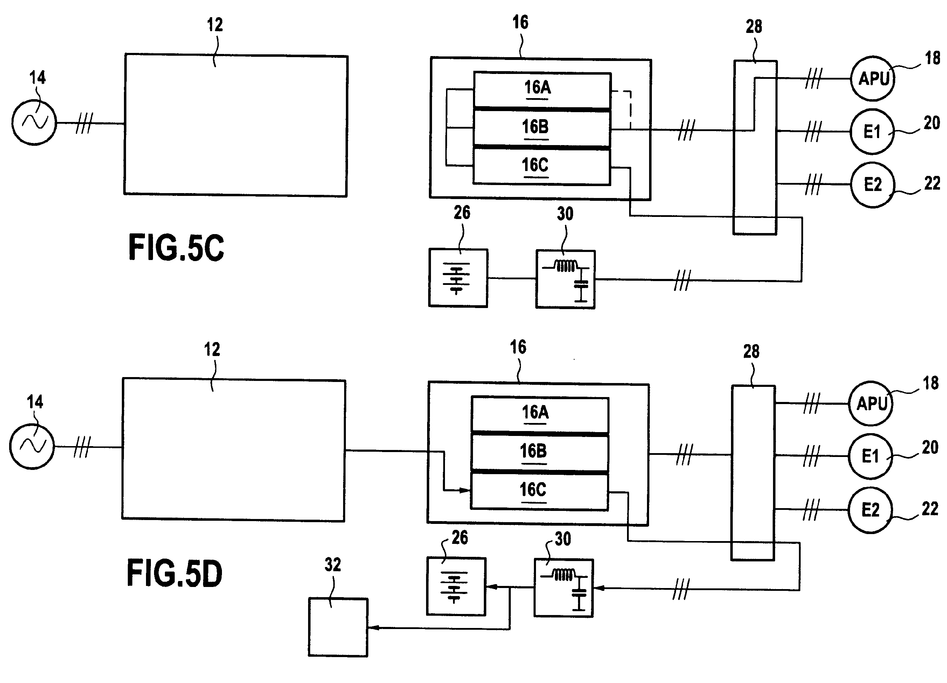

Le cas d'un démarrage de l'APU à partir de la batterie est illustré à la figure 5C et comme précédemment une tranche du convertisseur DC/AC est utilisée pour l'élévation de la tension de batterie, et l'une des deux autres à la conversion DC/AC, permettant d'assurer un taux de «dispatch » élevé, également pour cette configuration de démarrage à partir de la batterie.

Enfin, la figure 5D montre une utilisation du système pour recharger la batterie 26 ou tout simplement pour alimenter le réseau DC basse tension de l'aéronef 32 et ainsi remplacer une fonction appelée TRU (transformer rectifier unit). Dans ce mode de fonctionnement, une tranche de convertisseur DC/AC est alimentée par le réseau de puissance de bord 14 via le redresseur AC/DC 12 et fourni une tension continue en sortie pour le réseau DC basse tension (28Vdc par exemple) ou pour charger une batterie, ou pour les deux. L'onduleur fonctionne alors en convertisseur DC/DC abaisseur de tension (type BUCK), bidirectionnel, multiphases entrelacé.

On notera que si, pour certaine raison (par exemple niveau de puissance >Pn/k pour un redémarrage en vol), les tranches de convertisseur DC/AC doivent avoir une puissance égale à Pn, le principe d'utiliser une tranche, en tant que convertisseur DC/DC en interface avec la batterie, reste valable.

On notera que si la description a été faite en référence à la commande du démarrage de moteurs aéronautiques, il est clair que l'invention trouve application dans d'autres domaines, comme le domaine automobile ou celui des machines industrielles. De même, s'il a été fait référence dans les figures à une alimentation à partir d'un réseau triphasé, il est bien évident que l'invention trouve application à tout type de réseau d'alimentation à n phases (avec n>1), et donc y compris le réseau biphasé.

On notera aussi que dans le cas où le taux de distorsion harmonique lors des phases de démarrage des moteurs n'est pas capital, le redresseur AC/DC 12 peut être un simple redresseur à n phases (n=3 généralement) suivi d'une simple inductance de filtrage. Ceci permet d'optimiser la masse et la dissipation.

On notera de même que si référence à été faite à des transistors IGBT pour la réalisation des commutateurs, il peut être noté que d'autres types de commutateurs MOS commandés peuvent aussi être employés comme des MCT, BJT ou SCR.

## Revendications

1. Système électrique de démarrage comportant un module de conversion DC/AC (16) délivrant une tension alternative de démarrage à au moins un moteur (18, 20, 22) à partir d'une tension continue (Vdc) élaborée depuis un réseau de puissance alternatif (14) ou depuis une batterie (26) lorsque ledit réseau de puissance alternatif est indisponible, ledit module de conversion DC/AC comporte k onduleurs à n phases (160A, 160B) disposés en parallèle avec k>1 et délivrant chacun une puissance au moins deux fois inférieure à une puissance maximale Pmax requise pour démarrer ledit au moins un moteur, les deux lignes d'alimentation de chacun desdits onduleurs étant reliées à ladite tension continue (Vdc) au travers d'un dispositif de protection électronique (170A, 170B) et ladite tension continue (Vdc) est obtenue à partir d'un redresseur AC/DC (12) alimenté par ledit réseau de puissance alternatif, les n sorties de l'un au moins desdits onduleurs délivrant alors ladite tension alternative de démarrage dudit au moins un moteur (18, 20, 22) au travers de n inductances en série (320A, 320B) ou, lorsque ledit réseau de puissance alternatif (14) est indisponible, à partir de ladite batterie (26) reliée, au travers de n inductances en série (320B), à un desdits k onduleurs à n phases (160A, 160B) pour former un convertisseur survolteur DC/DC, les n sorties de l'un au moins desdits onduleurs (160A, 160B) restant délivrant alors ladite tension alternative de démarrage dudit au moins un moteur (18, 20, 22) au travers de n autres inductances en série (320A).

2. Système électrique de démarrage selon la revendication 1, **caractérisé en ce que** ledit module de conversion DC/AC comporte au moins deux onduleurs et chacun desdits k onduleurs délivrent une puissance Pmax/k.

3. Système électrique de démarrage selon la revendication 1, **caractérisé en ce que** ledit module de conversion DC/AC comporte deux onduleurs triphasés disposés en parallèle.

4. Système électrique de démarrage selon la revendication 3, dans lequel ledit au moins un moteur est capable de démarrer dans des conditions critiques de sécurité avec ladite puissance au moins deux fois inférieure à la puissance maximale, **caractérisé en ce que** ledit au moins un moteur est alimenté par l'un seulement desdits deux onduleurs triphasés de façon à augmenter le taux de fiabilité du système dans lesdites conditions critiques de sécurité par une redondance du type 1 sur 2.

5. Système électrique de démarrage selon la revendication 1, **caractérisé en ce que** ledit module de conversion DC/AC comporte au moins trois onduleurs et chacun desdits k onduleurs délivrent une puissance Pmax/(k-1).

6. Système électrique de démarrage selon la revendication 5, **caractérisé en ce que** ledit module de conversion DC/AC comporte trois onduleurs triphasés disposés en parallèle.

7. Système électrique de démarrage selon la revendication 6, **caractérisé en ce que** ledit au moins un moteur est alimenté par deux desdits trois onduleurs triphasés de façon à augmenter le taux de fiabilité du système par une redondance du type 2 sur 3.

8. Système électrique de démarrage selon la revendication 1, **caractérisé en ce que**, pour obtenir ladite tension continue Vdc à partir de ladite batterie, il comporte un circuit de commande (166B) avec un rapport cyclique de commutation fixe assurant la commande du convertisseur survolteur DC/DC.

9. Système électrique de démarrage selon l'une quelconque des revendications 1 à 8, **caractérisé en ce que** ledit dispositif de protection électronique comporte un interrupteur commandé (170A, 170B) en série sur une des deux lignes d'alimentation et un condensateur (168A, 168B) en parallèle sur ces deux lignes d'alimentation du coté dudit onduleur.

10. Système électrique de démarrage selon l'une quelconque des revendications 1 à 9, **caractérisé en ce qu'**il comporte en outre un filtre (30) disposé en sortie de ladite batterie.

## Patentansprüche

1. Elektrisches Startsystem, umfassend ein DC/AC-Wandlermodul (16), das mittels einer verarbeiteten Gleichspannung (Vdc) von einem Wechselleistungsnetz (14) oder von einer Batterie (26), wenn das Wechselleistungsnetz nicht verfügbar ist, eine Startwechselspannung an wenigstens einen Motor (18, 20, 22) liefert, das DC/AC-Wandlermodul umfasst k Wechselrichter mit n Phasen (160A, 160B), die parallel geschaltet sind, wobei k > 1, und die jeweils eine Leistung liefern, die wenigstens zweimal geringer als eine für das Starten des wenigstens einen Motors erforderliche Maximalleistung Pmax ist, wobei die beiden Versorgungsleitungen eines jeden der Wechselrichter mit der Gleichspannung (Vdc) über eine elektronische Schutzvorrichtung (170A, 170B) verbunden sind, und die Gleichspannung (Vdc) wird mit Hilfe eines AC/DC-Gleichrichters (12), welcher durch das Wechselleistungsnetz gespeist wird, erhalten, wobei die n Ausgänge von wenigstens einem der Wechselrichter nun die Startwechselspannung des wenigstens einen Motors (18, 20, 22) über in Reihe geschaltete n Induktivitäten (320A, 320B) oder, wenn das Wechselleistungsnetz (14) nicht verfügbar ist, mittels der Batterie (26) liefern, die über in Reihe geschaltete n Induktivitäten (320B) mit einem der n phasigen k Wechselrichter (160A, 160B) verbunden ist, um einen DC/DC-Aufwärtswandler zu bilden, wobei die n Ausgänge von dem wenigstens einen verbleibenden der Wechselrichter (160A, 160B) nun die Startwechselspannung des wenigstens einen Motors (18, 20, 22) über in Reihe geschaltete n weitere Induktivitäten (320A) liefern.

2. Elektrisches Startsystem nach Anspruch 1, **dadurch gekennzeichnet, dass** das DC/AC-Wandlermodul wenigstens zwei Wechselrichter umfasst und jeder der k Wechselrichter eine Leistung Pmax/k liefert.

3. Elektrisches Startsystem nach Anspruch 1, **dadurch gekennzeichnet, dass** das DC/AC-Wandlermodul zwei parallel geschaltete Dreiphasen-Wechselrichter umfasst.

4. Elektrisches Startsystem nach Anspruch 3, wobei der wenigstens eine Motor in der Lage ist, unter kritischen Sicherheitsbedingungen mit der Leistung, die wenigstens zweimal geringer als die Maximalleistung ist, zu starten, **dadurch gekennzeichnet, dass** der wenigstens eine Motor über nur einen der beiden Dreiphasen-Wechselrichter gespeist wird, um die Zuverlässigkeitsrate des Systems unter den kritischen Sicherheitsbedingungen durch eine Redundanz vom Typ 1 von 2 zu erhöhen.

5. Elektrisches Startsystem nach Anspruch 1, **dadurch gekennzeichnet, dass** das DC/AC-Wandlermodul wenigstens drei Wechselrichter umfasst und jeder der k Wechselrichter eine Leistung Pmax/(k-1) liefert.

6. Elektrisches Startsystem nach Anspruch 5, **dadurch gekennzeichnet, dass** das DC/AC-Wandlermodul drei parallel geschaltete Dreiphasen-Wechselrichter umfasst.

7. Elektrisches Startsystem nach Anspruch 6, **dadurch gekennzeichnet, dass** der wenigstens eine Motor über zwei der drei Dreiphasen-Wechselrichter gespeist wird, um die Zuverlässigkeitsrate des Systems durch eine Redundanz vom Typ 2 von 3 zu erhöhen.

8. Elektrisches Startsystem nach Anspruch 1, **dadurch gekennzeichnet, dass** es für den Erhalt der Gleichspannung Vdc mit Hilfe der Batterie einen Steuerkreis (166B) mit einem festen zyklischen Umschaltverhältnis, der die Steuerung des DC/DC-Aufwärtswandlers sicherstellt, umfasst.

9. Elektrisches Startsystem nach einem der Ansprüche 1 bis 8, **dadurch gekennzeichnet, dass** die elektronische Schutzvorrichtung einen gesteuerten Schalter (170A, 170B), der an einer der beiden Versorgungsleitungen in Reihe geschaltet ist, und einen Kondensator (168A, 168B), der an diesen beiden Versorgungsleitungen auf der Seite des Wechselrichters parallel geschaltet ist, umfasst.

10. Elektrisches Startsystem nach einem der Ansprüche 1 bis 9, **dadurch gekennzeichnet, dass** es ferner ein am Ausgang der Batterie angeordnetes Filter (30) umfasst.

## Claims

1. An electrical system comprising a DC/AC converter module (16) for delivering a starting AC voltage to at least one engine (18, 20, 22) from a DC voltage (Vdc) generated by an AC power network (14) or a battery (26) when said AC power network is not available, said DC/AC converter module comprising k n-phase inverters (160A, 160B) arranged in parallel with k>1, each delivering power that is no greater than half a maximum power Pₘₐₓ required for starting said at least one engine, the two power supply lines of each of said inverters being connected to said DC voltage (V_{dc}) through an electronic protection device (170A, 170B), and said DC voltage (V_{dc}) is obtained from an AC/DC rectifier (12) powered by the AC power network, the n outputs from at least one of said inverters delivering said starting AC voltage for said at least engine (18, 20, 22) via n respective series inductors (320A, 320B) or, when said AC power network is not available, from said battery (26) connected to one of said k n-phase inverters (160A, 160B) via said n series inductors (320B) to form a DC/DC boost converter, the n outputs of another one of said k n-phase inverters delivering via another n series inductors (320A) said starting AC voltage for said at least one engine (18, 20, 22).

2. An electrical starter system according to claim 1, when said AC power network (320A, 320B) is not available, **characterized in that** said DC/AC converter module comprises at least two inverters and each of said k inverters delivers a power Pₘₐₓ/k.

3. An electrical starter system according to claim 1, **characterized in that** said DC/AC converter module includes two three-phase inverters arranged in parallel.

4. An electrical starter system according to claim 3, wherein said at least one engine is capable of starting under safety-critical conditions with said power that is not greater than half the maximum power, the system being **characterized in that** said at least one engine is powered by only one of said two three-phase inverters so as to increase the reliability level of the system in said safety-critical conditions by using redundancy of the 1 on 2 type.

5. An electrical starter System according to claim 1, **characterized in that** said DC/AC converter module includes at least three inverters, and each of said k inverters delivers a power Pₘₐₓ/ (k-1).

6. An electrical starter system according to claim 5, **characterized in that** said DC/AC converter module includes three three-phase inverters arranged in parallel.

7. An electrical starter system according to claim 6, **characterized in that** said at least one engine is powered by two of said three three-phase inverters so as to increase the reliability level of the system by using redundancy of 2 on 3 type.

8. An electrical starter system according to claim 1, **characterized in that**, in order to obtain said DC voltage (V_{dc}) from said battery, it includes a control circuit (166B) with a fixed switching duty ratio for controlling the DC/DC boost converter.

9. An electrical starter system according to any one of claims 1 to 8, **characterized in that** said electronic protection device includes a controlled switch (170A, 170B) in series in one of the two power supply lines and a capacitor (168A, 168B) in parallel across said two power supply lines beside said inverter.

10. An electrical starter system according to any one of daims 1 to 9, **characterized in that** it further includes a filter (30) arranged at the outlet from said battery.
